# EUROPEAN PATENT APPLICATION

(11) **EP 4 727 144 A1**
(43) Date of publication of application: **15.04.2026**
(21) Application number: 23943812.0
(22) Date of filing: 28.06.2023
(51) Int. Cl.: H04N 21/482, H04N 21/45, H04N 21/422, H04N 21/475, H04N 21/431, G06Q 50/00

(54) **IMAGE DISPLAY DEVICE AND CONTROL METHOD THEREFOR**

(71) Applicant: LG Electronics Inc., Yeongdeungpo-gu Seoul 07336 (KR)
(72) Inventor: LEE, Jaekyung, Seoul 06772 (KR)
(74) Representative: Schott, Jakob Valentin
(86) International application number: PCT/KR2023/008987
(87) International publication number: WO 2025/005319

(57) **Abstract**

The present disclosure relates to an image display device and a control method therefor, enabling content desired by a user to be easily selected from various content, and enabling the selected content to be reproduced in an environment intended by the user. The present disclosure may provide an image display device comprising: a display; a communication interface for communicating with at least one external server; a user input interface for communicating with a remote control device; and a controller controlling so as to receive a user command inputted through the remote control device, display, on the display, a content list including at least one content meeting a user intent identified from the user command through artificial intelligence, and retrieve and display the past viewing history of content selected from the content list, wherein the past viewing history includes viewed time point information of the selected content and information on an acquaintance with whom the selected content was watched together.

## Description

### TECHNICAL FIELD

The present disclosure relates to an image display device and a method for controlling the same that enable use of the image display device to be implemented in consideration of convenience of a user.

### BACKGROUND

An image display device includes, for example, a function for receiving and processing a broadcast image viewable by a user. The image display device displays a broadcast, which is selected by the user from among broadcast signals transmitted from a broadcast station, on a display. Currently broadcasters are transitioning from analog to digital broadcasting.

Digital broadcasting refers to broadcasting of digital video and audio signals. The digital broadcast has low data loss due to robustness against external noise, error correction, high resolution and a high-definition screen, as compared with an analog broadcast. In addition, digital broadcasting can provide a bidirectional service unlike analog broadcasting.

In order to use digital broadcasting including a variety of content, the performance of an image display device has been improved and the function thereof has been diversified. As the performance of the image display device has been improved, various functions of the image display device, such as gaming, music listening or Internet shopping, using various applications can be performed in addition to a function for receiving an image signal from a broadcast station and viewing a broadcast.

The development of an image display device and a method for controlling the same, which allow a user to easily select desired content from various pieces of content and play the selected content in an environment intended by the user, is continuously required.

### DISCLOSURE

### TECHNICAL PROBLEM

The present disclosure is intended to provide an image display device and a method for controlling the same, which allow a user to easily select desired content from various pieces of content and play the selected content in an environment intended by the user.

### TECHNICAL SOLUTION

To achieve the above objects, according to an aspect of the present disclosure, an image display device may be provided, including a display, a communication interface for communicating with at least one external server, a user input interface for communicating with a remote control device, and a controller controlling to receive a user command input through the remote control device, display, on the display, a content list including at least one piece of content corresponding to a user intent identified from the user command through artificial intelligence, and search for and display a past viewing history for content selected from the content list, wherein the past viewing history includes information about a viewing time of the selected content and information about an acquaintance who viewed the selected content together.

Personal information including the past viewing history may be recorded in at least one of one of the at least one external server or a storage within the image display device.

The controller may control to display a search criterion based on the user intent together, when displaying the content list.

The controller may control to display a profile image of the acquaintance who viewed the content together during playback of the selected content.

The displayed profile image may be a profile image corresponding to the viewing time.

The controller may control to synthesize the profile image corresponding to the viewing time based on a profile image for a time other than the viewing time through artificial intelligence.

The controller may control to connect to one of the at least one external server through the communication interface and search for the at least one piece of content corresponding to the user intent.

The user command may be a voice command input through the remote control device.

The controller may control to connect to one of the at least one external server in response to the user intent, and download and display social network service (SNS) information about the acquaintance.

The controller may control to display a usage guide for guiding to occurrence of a specific event and change appearance of a guide agent within the usage guide over time.

Further, according to an aspect of the present disclosure, a method for controlling an image display device may be provided, including receiving a user command input through a remote control device;, displaying a content list including at least one piece of content corresponding to a user intent identified from the user command through artificial intelligence, and searching for and displaying a past viewing history for content selected from the content list, wherein the past viewing history includes information about a viewing time of the selected content and information about an acquaintance who viewed the selected content together.

### ADVANTAGEOUS EFFECTS

Effects of the image display device and the method for controlling the same according to the present disclosure will be described as follows.

According to at least one embodiment of the present disclosure, there is an advantage that a user may easily select desired content from various pieces of content and play the selected content in an environment intended by the user.

Additional scopes of the applicability of the present disclosure will become apparent from the detailed description below. However, because various changes and modifications within the scope of the present disclosure may be clearly understood by those skilled in the art, it should be understood that the detailed description and specific embodiments such as preferred embodiments of the present disclosure are given only as examples.

### BRIEF DESCRIPTION OF THE DRAWINGS

FIG. 1 is a schematic block diagram of an image display device according to an embodiment of the present disclosure.
FIG. 2 is a view illustrating a control method of a remote control device that controls an image display device according to an embodiment of the present disclosure.
FIG. 3 is a block diagram of a remote control device that controls an image display device according to an embodiment of the present disclosure.
FIG. 4 is a flowchart illustrating an operation of an image display device according to an embodiment of the present disclosure.
FIGS. 5 to 9 illustrate screens displayed on an image display device according to an embodiment of the present disclosure.
FIG. 10 illustrates an example of image synthesis or generation according to an embodiment of the present disclosure.
FIG. 11 illustrates screens displayed on an image display device according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

The terms "module" and "unit" attached to describe the names of components are used herein to help the understanding of the components and thus should not be considered as having specific meanings or roles. Accordingly, the terms "module" and "unit" may be used interchangeably.

In addition, each of these elements may be configured as a separate individual hardware module or implemented as two or more hardware modules. Two or more elements may be implemented as a single hardware module. In some cases, at least one of these elements may be implemented as software.

An image display device as set forth herein is an intelligent image display device equipped with a computer support function in addition to a broadcast reception function, for example. Since an Internet function is added to a broadcast reception function, the image display device may have user-friendly interfaces such as a handwriting input device, a touchscreen, or a pointing device. Further, because the image display device supports wired or wireless Internet, it is capable of e-mail transmission/reception, Web browsing, banking, gaming, etc. by connecting to the Internet or a computer. To implement these functions, the image display device may operate based on a standard, general-purpose Operating System (OS).

Various applications can be freely added to or deleted from, for example, a general-purpose OS kernel of the image display device according to the present invention. Therefore, the image display device may perform a number of user-friendly functions. The image display device may be a network TV, a Hybrid broadcast broadband TV (HBBTV), a smart TV, etc. for example. The image display device is also applicable to smart phones.

Embodiments of the present invention will be described in detail with reference to the attached drawings, but it should be understood that they are merely illustrative of the present invention and should not be interpreted as limiting the scope of the present invention.

In addition, although the terms used in the present invention are selected from generally known and used terms, some of the terms mentioned in the description of the present invention, the detailed meanings of which are described in relevant parts of the description herein, have been selected at the discretion of the applicant. Furthermore, the present invention must be understood, not simply by the actual terms used but by the meanings of each term lying within.

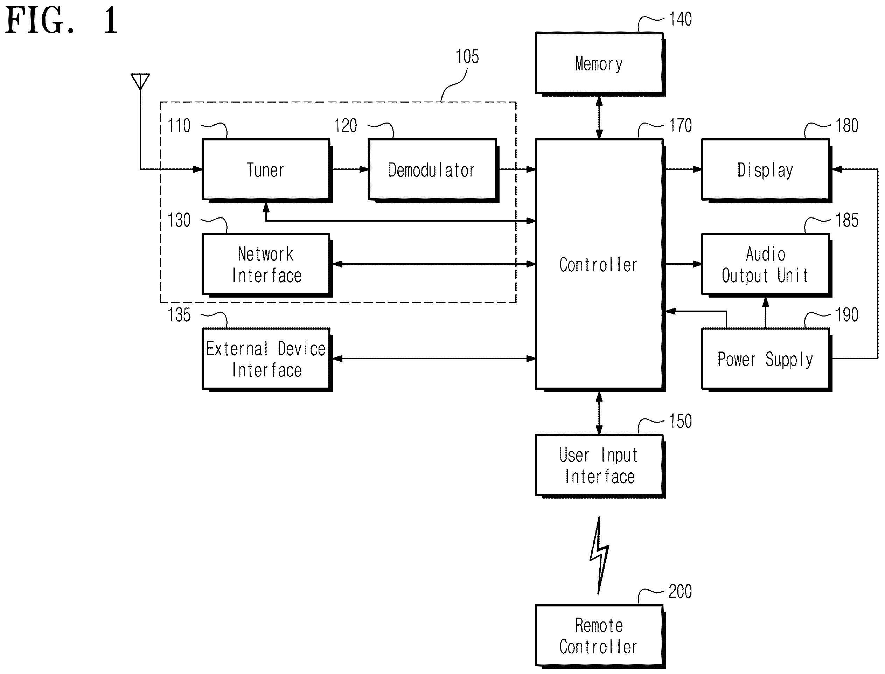

FIG. 1 is a schematic block diagram of an image display device according to one aspect of the present disclosure.

Referring to FIG. 1, an image display device 100 according to another embodiment of the present invention includes a broadcast receiver 105, an external device interface 135, a memory 140, a user input interface 150, a controller 170, a display 180, an audio output unit 185, a power supply 190, and a camera module (not shown). The broadcasting receiver 105 and the external device interface 135 may be collectively referred to as a communicator.

The broadcasting receiver 105 may include a tuner 110, a demodulator 120 and a network interface 130. As needed, the broadcasting receiver 105 may be configured so as to include only the tuner 110 and the demodulator 120 or only the network interface 130.

The tuner 110 tunes to a Radio Frequency (RF) broadcast signal corresponding to a channel selected by a user from among a plurality of RF broadcast signals received through an antenna and downconverts the tuned RF broadcast signal into a digital Intermediate Frequency (IF) signal or an analog baseband video or audio signal.

More specifically, if the tuned RF broadcast signal is a digital broadcast signal, the tuner 110 downconverts the tuned RF broadcast signal into a digital IF signal DIF. On the other hand, if the tuned RF broadcast signal is an analog broadcast signal, the tuner 110 downconverts the tuned RF broadcast signal into an analog baseband video or audio signal CVBS/SIF. That is, the tuner 110 may be a hybrid tuner capable of processing not only digital broadcast signals but also analog broadcast signals. The analog baseband video or audio signal CVBS/SIF may be directly input to the controller 170.

The tuner 110 may be capable of receiving RF broadcast signals from an Advanced Television Systems Committee (ATSC) single-carrier system or from a Digital Video Broadcasting (DVB) multi-carrier system.

The tuner 110 may sequentially tune to a number of RF broadcast signals corresponding to all broadcast channels previously stored by a channel storage function from a plurality of RF signals received through the antenna and may downconvert the tuned RF broadcast signals into IF signals or baseband video or audio signals.

The demodulator 120 receives the digital IF signal DIF from the tuner 110 and demodulates the digital IF signal DIF.

For example, if the digital IF signal DIF is an ATSC signal, the demodulator 120 may perform 8-Vestigal SideBand (VSB) demodulation on the digital IF signal DIF. The demodulator 120 may also perform channel decoding. For channel decoding, the demodulator 120 may include a Trellis decoder (not shown), a de-interleaver (not shown) and a Reed-Solomon decoder (not shown) so as to perform Trellis decoding, de-interleaving and Reed-Solomon decoding.

For example, if the digital IF signal DIF is a DVB signal, the demodulator 120 performs Coded Orthogonal Frequency Division Multiple Access (COFDMA) demodulation upon the digital IF signal DIF. The demodulator 120 may also perform channel decoding. For channel decoding, the demodulator 120 may include a convolution decoder (not shown), a de-interleaver (not shown), and a Reed-Solomon decoder (not shown) so as to perform convolution decoding, de-interleaving, and Reed-Solomon decoding.

The demodulator 120 may perform demodulation and channel decoding on the digital IF signal DIF, thereby obtaining a Transport Stream (TS). The TS may be a signal in which a video signal, an audio signal and a data signal are multiplexed. For example, the TS may be an MPEG-2 TS in which an MPEG-2 video signal and a Dolby AC-3 audio signal are multiplexed. An MPEG-2 TS may include a 4-byte header and a 184-byte payload.

In order to properly handle not only ATSC signals but also DVB signals, the demodulator 120 may include an ATSC demodulator and a DVB demodulator.

The TS output from the demodulator 120 may be input to the controller 170 and thus subjected to demultiplexing and A/V signal processing. The processed video and audio signals are output to the display 180 and the audio output unit 185, respectively.

The external device interface 135 may serve as an interface between an external device and the image display device 100. For interfacing, the external device interface 135 may include an A/V Input/Output (I/O) unit (not shown) and/or a wireless communication module (not shown).

The external device interface 135 may be connected to an external device such as a Digital Versatile Disc (DVD) player, a Blu-ray player, a game console, a camera, a camcorder, or a computer (e.g., a laptop computer), wirelessly or by wire. Then, the external device interface 135 externally receives video, audio, and/or data signals from the external device and transmits the received input signals to the controller 170. In addition, the external device interface 135 may output video, audio, and data signals processed by the controller 170 to the external device. In order to receive or transmit audio, video and data signals from or to the external device, the external device interface 135 includes the A/V I/O unit (not shown) and/or the wireless communication module (not shown).

The A/V I/O unit may include a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, and a D-sub port, in order to input the video and audio signals of the external device to the image display device 100.

The wireless communication module may perform short-range wireless communication with other electronic devices. For short-range wireless communication, the wireless communication module may use Bluetooth, Radio-Frequency IDentification (RFID), Infrared Data Association (IrDA), Ultra WideBand (UWB), ZigBee, and Digital Living Network Alliance (DLNA) communication standards.

The external device interface 135 may be connected to various set-top boxes through at least one of the above-described ports and may thus perform an I/O operation with the various set-top boxes.

The external device interface 135 may receive applications or an application list from an adjacent external device and provide the applications or the application list to the controller 170 or the memory 140.

The network interface 130 serves as an interface between the image display device 100 and a wired/wireless network such as the Internet. The network interface 130 may include an Ethernet port for connection to a wired network. For connection to wireless networks, the network interface 130 may use Wireless Local Area Network (WLAN) (i.e., Wi-Fi), Wireless Broadband (WiBro), World Interoperability for Microwave Access (WiMax), and High Speed Downlink Packet Access (HSDPA).

The network interface 130 may transmit data to or receive data from another user or electronic device over a connected network or another network linked to the connected network. Especially, the network interface 130 may transmit data stored in the image display device 100 to a user or electronic device selected from among users or electronic devices pre-registered with the image display device 100.

The network interface 130 may access a specific Web page over a connected network or another network linked to the connected network. That is, the network interface 130 may access a specific Web page over a network and transmit or receive data to or from a server. Additionally, the network interface 130 may receive content or data from a CP or an NP. Specifically, the network interface 130 may receive content such as movies, advertisements, games, VoD, and broadcast signals, and information related to the content from a CP or an NP. Also, the network interface 130 may receive update information about firmware from the NP and update the firmware. The network interface 130 may transmit data over the Internet or to the CP or the NP.

The network interface 130 may selectively receive a desired application among open applications over a network.

In an embodiment of the present invention, when a game application is executed in the image display device, the network interface 130 may transmit data to or receive data from a user terminal connected to the image display device through a network. In addition, the network interface 130 may transmit specific data to or receive specific data from a server that records game scores.

The memory 140 may store various programs necessary for the controller 170 to process and control signals, and may also store processed video, audio and data signals.

The memory 140 may temporarily store a video, audio and/or data signal received from the external device interface 135 or the network interface 130. The memory 140 may store information about broadcast channels by the channel storage function.

The memory 140 may store applications or a list of applications received from the external device interface 135 or the network interface 130.

In an embodiment of the present invention, when the image display device provides a game application, the memory 140 may store user-specific information and game play information of a user terminal used as a game controller.

The memory 140 may include, for example, at least one of a flash memory-type storage medium, a hard disk-type storage medium, a multimedia card micro-type storage medium, a card-type memory (e.g. a Secure Digital (SD) or eXtreme Digital (XD) memory), a Random Access Memory (RAM), or a Read-Only Memory (ROM) such as an Electrically Erasable and Programmable Read Only Memory (EEPROM). The image display device 100 may reproduce content stored in the memory 140 (e.g. video files, still image files, music files, text files, and application files) to the user.

While the memory 140 is shown in FIG. 1 as configured separately from the controller 170, to which the present invention is not limited, the memory 140 may be incorporated into the controller 170, for example.

The user input interface 150 transmits a signal received from the user to the controller 170 or transmits a signal received from the controller 170 to the user.

For example, the user input interface 150 may receive control signals such as a power-on/off signal, a channel selection signal, and a screen setting signal from a remote control device 200 or may transmit a control signal received from the controller 170 to the remote control device 200, according to various communication schemes, for example, RF communication and IR communication.

For example, the user input interface 150 may provide the controller 170 with control signals received from local keys (not shown), such as inputs of a power key, a channel key, and a volume key, and setting values.

Also, the user input interface 150 may transmit a control signal received from a sensor unit (not shown) for sensing a user gesture to the controller 170 or transmit a signal received from the controller 170 to the sensor unit. The sensor unit may include a touch sensor, a voice sensor, a position sensor, a motion sensor, etc.

The controller 170 may demultiplex the TS received from the tuner 110, the demodulator 120, or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be audibly output through the audio output unit 185. Also, the audio signal processed by the controller 170 may be transmitted to the external output device through the external device interface 135.

While not shown in FIG. 1, the controller 170 may include a DEMUX and a video processor.

In addition, the controller 170 may provide overall control to the image display device 100. For example, the controller 170 may control the tuner 110 to tune to an RF broadcast signal corresponding to a user-selected channel or a prestored channel.

The controller 170 may control the image display device 100 according to a user command received through the user input interface 150 or according to an internal program. Especially the controller 170 may access a network and download an application or application list selected by the user to the image display device 100 over the network.

For example, the controller 170 controls the tuner 110 to receive a signal of a channel selected according to a specific channel selection command received through the user input interface 150 and processes a video, audio and/or data signal of the selected channel. The controller 170 outputs the processed video or audio signal along with information about the user-selected channel to the display 180 or the audio output unit 185.

As another example, the controller 170 outputs a video or audio signal received from an external device such as a camera or a camcorder through the external device interface 135 to the display 180 or the audio output unit 185 according to an external device video playback command received through the external device interface 150.

The controller 170 may control the display 180 to display images. For instance, the controller 170 may control the display 180 to display a broadcast image received from the tuner 110, an externally input image received through the external device interface 135, an image received through the network interface 130, or an image stored in the memory 140. The image displayed on the display 180 may be a Two-Dimensional (2D) or Three-Dimensional (3D) still image or moving picture.

The controller 170 may control content playback. The content may include any content stored in the image display device 100, received broadcast content, and externally input content. The content includes at least one of a broadcast image, an externally input image, an audio file, a still image, a Web page, or a text file.

Upon receipt of a return-to-home screen input, the controller 170 may control display of the home screen on the display 180.

The home screen may include a plurality of card objects classified according to content sources. The card objects may include at least one of a card object representing a thumbnail list of broadcast channels, a card object representing a broadcast program guide, a card object representing a program reservation list or a program recording list, or a card object representing a media list of a device connected to the image display device. The card objects may further include at least one of a card object representing a list of connected external devices or a card object representing a call-associated list.

The home screen may further include an application menu including at least one application that can be executed.

Upon receipt of a card object move input, the controller 170 may control movement of a card object corresponding to the card object move input on the display 180, or if the card object is not displayed on the display 180, the controller 170 may control display of the card object on the display 180.

When a card object is selected from among the card objects on the home screen, the controller 170 may control display of an image corresponding to the selected card object on the display 180.

The controller 170 may control display of an input broadcast image and an object representing information about the broadcast image in a card object representing broadcast images. The size of the broadcast image may be set to a fixed size.

The controller 170 may control display of a set-up object for at least one of image setting, audio setting, screen setting, reservation setting, setting of a pointer of the remote control device, or network setting on the home screen.

The controller 170 may control display of a log-in object, a help object, or an exit object on a part of the home screen.

The controller 170 may control display of an object representing the total number of available card objects or the number of card objects displayed on the display 180 among all card objects, on a part of the home screen.

If one of the card objects displayed on the display 180 is selected, the controller 170 may fullscreen the selected card object to cover the entirety of the display 180.

Upon receipt of an incoming call at a connected external device or the image display device 100, the controller 170 may control focusing-on or shift of a call-related card object among the plurality of card objects.

If an application view menu item is selected, the controller 170 may control display of applications or a list of applications that are present in the image display device 100 or downloadable from an external network.

The controller 170 may control installation and execution of an application downloaded from the external network along with various UIs. Also, the controller 170 may control display of an image related to the executed application on the display 180, upon user selection.

Although not shown, the image display device 100 may further include a channel browsing processor for generating thumbnail images corresponding to channel signals or externally input signals.

The channel browsing processor may receive the TS output from the demodulator 120 or the TS output from the external device interface 135, extract images of the received TS and generate thumbnail images. The thumbnail images may be directly output to the controller 170 or may be output after being encoded. Also, it is possible to encode the thumbnail images into a stream and output the stream to the controller 170. The controller 170 may display a thumbnail list including a plurality of received thumbnail images on the display 180. The thumbnail images may be updated sequentially or simultaneously in the thumbnail list. Therefore, the user can readily identify the content of broadcast programs received through a plurality of channels.

The display 180 may convert a processed video signal, a processed data signal, and an OSD signal received from the controller 170 or a video signal and a data signal received from the external device interface 135 into RGB signals, thereby generating driving signals.

The display 180 may be various types of displays such as a Plasma Display Panel (PDP), a Liquid Crystal Display (LCD), an Organic Light-Emitting Diode (OLED) display, a flexible display, and a 3D display.

The display 180 may also be a touchscreen that can be used not only as an output device but also as an input device.

The audio output unit 185 may receive a processed audio signal (e.g., a stereo signal, a 3.1-channel signal or a 5.1-channel signal) from the controller 170 and output the received audio signal as sound. The audio output unit 185 may employ various speaker configurations.

To sense a user gesture, the image display device 100 may further include the sensor unit (not shown) that has at least one of a touch sensor, a voice sensor, a position sensor, and a motion sensor, as stated before. A signal sensed by the sensor unit may be output to the controller 170 through the user input interface 150.

The image display device 100 may further include the camera unit (not shown) for capturing images of a user. Image information captured by the camera unit may be input to the controller 170.

The controller 170 may sense a user gesture from an image captured by the camera unit or a signal sensed by the sensor unit, or by combining the captured image and the sensed signal.

The power supply 190 supplies power to the image display device 100.

Particularly, the power supply 190 may supply power to the controller 170 which may be implemented as a System On Chip (SOC), the display 180 for displaying an image, and the audio output unit 185 for audio output.

For supplying power, the power supply 190 may include a converter (not shown) for converting Alternating Current (AC) into Direct Current (DC). If the display 180 is configured with, for example, a liquid crystal panel having a plurality of backlight lamps, the power supply 190 may further include an inverter (not shown) capable of performing Pulse Width Modulation (PWM) for luminance change or dimming driving.

The remote control device 200 transmits a user input to the user input interface 150. For transmission of user input, the remote control device 200 may use various communication techniques such as Bluetooth, RF communication, IR communication, Ultra Wideband (UWB) and ZigBee.

In addition, the remote control device 200 may receive a video signal, an audio signal or a data signal from the user input interface 150 and output the received signals visually, audibly or as vibrations.

The above-described image display device 100 may be a fixed digital broadcast receiver capable of receiving at least one of ATSC (8-VSB) broadcast programs, DVB-T (COFDM) broadcast programs, and ISDB-T (BST-OFDM) broadcast programs.

The block diagram of the image display device 100 illustrated in FIG. 1 is purely exemplary. Depending upon the specifications of the image display device 100 in actual implementation, the components of the image display device 100 may be combined or omitted or new components may be added. That is, two or more components may be incorporated into one component or one component may be configured as separate components, as needed. In addition, the function of each block is described for the purpose of describing the embodiment of the present invention and thus specific operations or devices should not be construed as limiting the scope of the present invention.

Unlike the configuration illustrated in FIG. 1, the image display device 100 may be configured so as to receive and play back video content through the network interface 130 or the external device interface 135, without the tuner 110 and the demodulator 120 shown in FIG. 1.

Functions related to artificial intelligence (AI) according to the present disclosure may be performed through the controller and the memory. The controller may include one or more processors. In this case, the one or more processors may be general-purpose processors such as a central processing unit (CPU), an application processor (AP), and digital signal processor (DSP), dedicated graphic processors such as a graphics processing unit (GPU) or a vision processing unit (VPU), or dedicated AI processors such as a neural processing unit (NPU). The one or more processors may control to process input data according to a predefined operation rule or an AI model stored in the memory. Alternatively, when the one or more processors are dedicated AI processors, the dedicated AI processors may be designed in a hardware structure specialized for processing a specific AI model.

AI refers to a field that studies artificial intelligence or methodology capable of achieving artificial intelligence. Machine learning refers to a field that defines various problems handled in the AI field and studies methodology for solving the problems. Machine learning may also be defined as an algorithm for raising performance for any task through steady experience of the task.

An artificial neural network (ANN) may refer to a model in general having problem solving capabilities, that is composed of artificial neurons (nodes) constituting a network by a combination of synapses, as a model used in machine learning. The ANN may be defined by a connection pattern between neurons of different layers, a learning process of updating model parameters, and/or an activation function for generating an output value.

The ANN may include an input layer, an output layer, and, optionally, one or more hidden layers. Each layer includes one or more neurons and the ANN may include a synapse connecting neurons. In the ANN, each neuron may output input signals, which are input through the synapse, weights, and function values of an activation function for deflection.

A model parameter refers to a parameter determined through learning and includes a weight of synaptic connection and a deflection of a neuron. A hyperparameter refers to a parameter that should be configured before learning in a machine learning algorithm and includes a learning rate, the number of repetitions, a mini batch size, an initialization function, and the like.

The purpose of learning of the ANN may be understood as determining the model parameter that minimizes a loss function. The loss function may be used as an index to determine an optimal model parameter in a learning process of the ANN.

Machine learning may be classified into supervised learning, unsupervised learning, and reinforcement learning, according to a learning scheme.

Supervised learning refers to a method of training the ANN in a state in which a label for training data is given. The label may represent a correct answer (or result value) that the ANN should infer when the training data is input to the ANN. Unsupervised learning may refer to a method of training the ANN in a state in which the label for the training data is not given. Reinforcement learning may refer to a learning method in which an agent defined in a certain environment is trained to select a behavior or a behavior order that maximizes accumulative compensation in each state.

Among ANNs, machine learning implemented as a deep neural network (DNN) including a plurality of hidden layers is also called deep learning. Deep learning is a part of machine learning. Hereinbelow, machine learning includes deep learning.

An object detection model using machine learning includes a you only look once (YOLO) model of a single-step scheme, a faster regions with convolution neural networks (R-CNN) model of a two-step scheme, and the like.

The you only look once (YOLO) model is a model in which an object existing in an image and a position of the corresponding object may be predicted as the image is viewed only once.

The you only look once (YOLO) model divides the original image into grids of the same size. Then, for each grid, the number of bounding boxes specified in a predefined form around a center of the grid is predicted, and reliability is calculated based on the predicted number.

Thereafter, whether the image contains the object or contains only a background may be included, and a location with high object reliability may be selected, so that an object category may be identified.

The faster regions with convolution neural networks (R-CNN) model is a model that may detect the object faster than an RCNN model and a Fast RCNN model.

The faster regions with convolution neural networks (R-CNN) model will be described in detail.

First, a feature map is extracted from the image via a convolution neural network (CNN) model. Based on the extracted feature map, a plurality of regions of interest (RoIs) are extracted. RoI pooling is performed for each region of interest.

The RoI pooling is a process of setting grids of a feature map to which the regions of interest are projected to fit a H x W size that is determined in advance and extracting the greatest value for each cell included in each grid to extract a feature map having the H x W size.

A feature vector may be extracted from the feature map having the H x W size, and identification information of the object may be obtained from the feature vector.

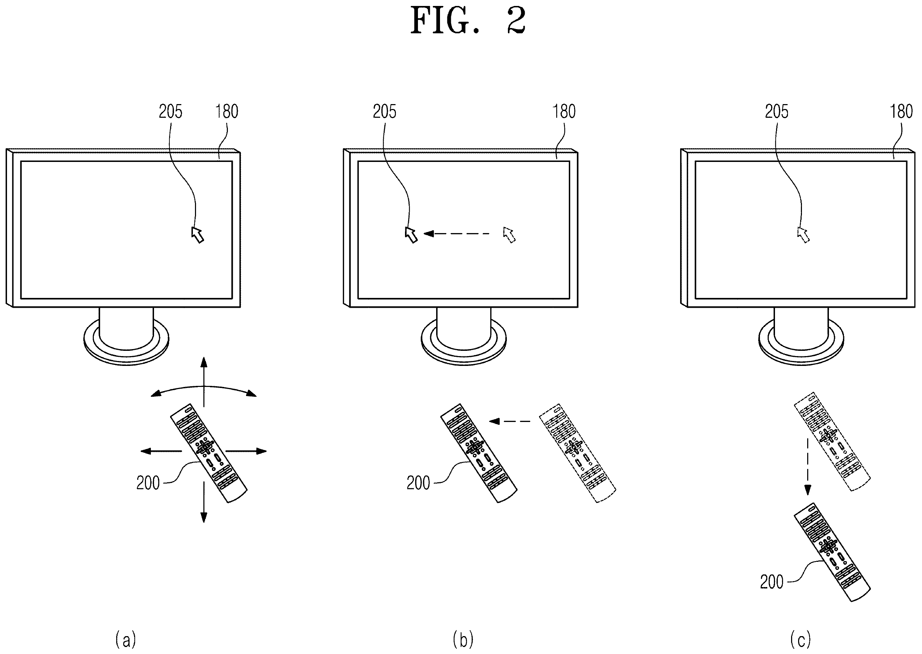

FIG. 2 is a view illustrating a control method of a remote control device that controls an image display device according to one aspect of the present disclosure.

FIG. 2(a) illustrates a pointer 205 representing movement of the remote control device 200 displayed on the display 180.

The user may move or rotate the remote control device 200 up and down, side to side (FIG. 2(b)), and back and forth (FIG. 2(c)). The pointer 205 displayed on the display 180 of the image display device moves according to the movement of the remote control device 200. Since the pointer 205 moves in accordance with the movement of the remote control device 200 in a 3D space as shown in FIG. 2, the remote control device 200 may be referred to as a pointing device.

Referring to FIG. 2(b), if the user moves the remote control device 200 to the left, the pointer 205 moves to the left on the display 180.

A sensor of the remote control device 200 detects movement of the remote control device 200 and transmits motion information of the remote control device 200 to the image display device. Then, the image display device calculates the coordinates of the pointer 205 from the motion information of the remote control device 200. The image display device then displays the pointer 205 at the calculated coordinates.

Referring to FIG. 13(c), while pressing a predetermined button of the remote control device 200, the user moves the remote control device 200 away from the display 180. Then, a selected area corresponding to the pointer 205 may be zoomed in on and enlarged on the display 180. On the contrary, if the user moves the remote control device 200 toward the display 180, the selected area corresponding to the pointer 205 is zoomed out and thus contracted on the display 180. On the contrary, when the remote control device 200 moves away from the display 180, the selected area may be zoomed out and when the remote control device 200 approaches the display 180, the selected area may be zoomed in.

With the predetermined button of the remote control device 200 pressed, the up, down, left and right movements of the remote control device 200 may be ignored. That is, when the remote control device 200 moves away from or approaches the display 180, only the back and forth movements of the remote control device 200 are sensed, while the up, down, left and right movements of the remote control device 200 are ignored. Unless the predetermined button is pressed in the remote control device 200, the pointer 205 moves in accordance with the up, down, left or right movement of the remote control device 200.

The movement speed and direction of the pointer 205 may correspond to the movement speed and direction of the remote control device 200.

The pointer of the present specification is an object displayed on the display 180 in correspondence with the movement of the remote control device 200. Therefore, the pointer 205 may have various shapes other than the arrow illustrated in FIG. 13. For example, the pointer 205 may be a dot, a cursor, a prompt, a thick outline, etc. The pointer 205 may be displayed across a plurality of points, such as a line and a surface, as well as at a single point on horizontal and vertical axes.

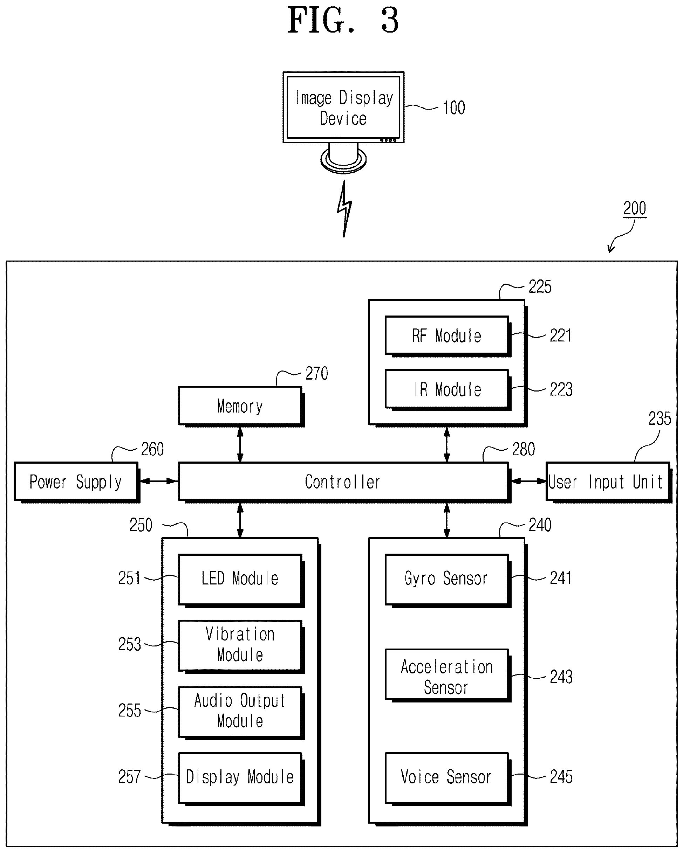

FIG. 3 is a block diagram of a remote control device that controls an image display device according to one aspect of the present disclosure.

Referring to fig. 3, the remote control device 200 may include a wireless communication module 225, a user input unit 235, a sensor unit 240, an output unit 250, a power supply 260, a memory 270, and a controller 280.

The wireless communication module 225 transmits signals to and/or receives signals from either of the above-described image display devices according to the embodiments of the present invention, that is, the image display device 100.

The remote control device 200 may include an RF module 1421 for transmitting RF signals to and/or receiving RF signals from the image display device 100 according to an RF communication standard. The remote control device 200 may also include an IR module 223 for transmitting IR signals to and/or receiving IR signals from the image display device 100 according to an IR communication standard.

In the present embodiment, the remote control device 200 transmits motion information representing movement of the remote control device 200 to the image display device 100 through the RF module 221.

The remote control device 200 may also receive signals from the image display device 100 through the RF module 221. As needed, the remote control device 200 may transmit commands such as a power on/off command, a channel switch command, or a volume change command to the image display device 100 through the IR module 223.

The user input unit 235 may include a keypad, a plurality of buttons, a touchpad and/or a touchscreen. The user may enter commands associated with the image display device 100 to the remote control device 200 by manipulating the user input unit 235. If the user input unit 235 includes a plurality of hard buttons, the user may input various commands associated with the image display device 100 to the remote control device 200 by pressing the hard buttons. Alternatively or additionally, if the user input unit 235 includes a touchscreen displaying a plurality of soft keys, the user may input various commands associated with the image display device 100 to the remote control device 200 by touching the soft keys. The user input unit 235 may also include various input tools other than those set forth herein, such as a scroll key and/or a jog wheel.

The user input unit 235 may include a microphone for receiving an audio signal, such as a user's voice. Voice data collected by the user input unit 235 may be analyzed and processed as a user's control command.

The sensor unit 240 may include a gyro sensor 241 and/or an acceleration sensor 243.

The gyro sensor 241 may sense movement of the remote control device 200.

For example, the gyro sensor 241 may sense movement of the remote control device 200 in X, Y, and Z-axis directions. The acceleration sensor 243 may sense the speed of the remote control device 200. The sensor unit 240 may further include a distance sensor for sensing the distance between the remote control device 200 and the display device 100.

The output unit 250 may output a video and/or audio signal corresponding to manipulation of the user input unit 235 or corresponding to a signal received from the image display device 100. The user may easily identify whether the user input unit 235 has been manipulated or whether the image display device 100 has been controlled, based on the video and/or audio signal output by the output unit 250.

The output unit 250 may include a Light Emitting Diode (LED) module 251 which is turned on or off whenever the user input unit 235 is manipulated or whenever a signal is received from or transmitted to the image display device 100 through the wireless communication module 225, a vibration module 253 which generates vibrations, an audio output module 255 which outputs audio data, and/or a display module 257 which outputs video data.

The power supply 260 supplies power to the remote control device 200. If the remote control device 200 remains stationary for a predetermined time or longer, the power supply 260 may, for example, reduce or shut off supply of power to the spatial remote control device 200 in order to save power. The power supply 260 may resume power supply if a predetermined key of the remote control device 200 is manipulated.

The memory 270 may store various types of programs and application data necessary to control or drive the remote control device 200. The remote control device 200 may wirelessly transmit signals to and/or receive signals from the image display device 100 over a predetermined frequency band with the aid of the RF module 221. The controller 280 of the remote control device 200 may store information regarding the frequency band used for the remote control device 200 to wirelessly transmit signals to and/or wirelessly receive signals from the paired image display device 100 in the memory 270, for later use.

The controller 280 provides overall control to the remote control device 200. The controller 280 may transmit a signal corresponding to a key manipulation detected from the user input unit 235 or a signal corresponding to motion of the remote control device 200, as sensed by the sensor unit 240, to the image display device 100.

In one example, the sensor unit 240 may further include a voice sensor 245 (e.g., a microphone) for receiving the user's voice. The user's voice input via the voice sensor 245 may be transmitted to the image display device 100 via the wireless communication module 225.

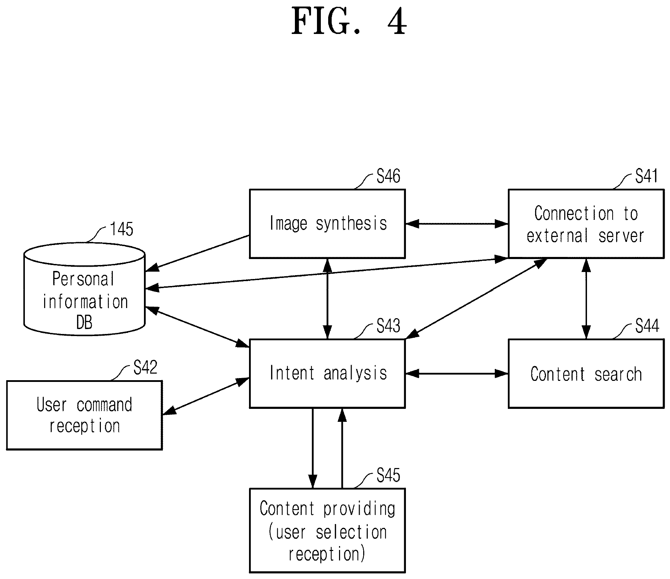

With reference to FIG. 4, an operation of an image display device according to an embodiment of the present disclosure will be described. FIG. 4 is a flowchart illustrating an operation of an image display device according to an embodiment of the present disclosure.

The memory 140 of the image display device 100 may include a personal information DB 145 for storing personal information. The personal information may include personal profile information, schedule/event information, and viewing history information about a user (or viewer) of the image display device 100, personal profile information about each acquaintance (e.g., friend or family member) of the user, and profile images (photos or videos) of the user and each acquaintance.

The personal information DB 145 does not necessarily have to be implemented within the image display device 100, but may be implemented on an external server. That is, the personal information DB 145 may be implemented in at least one of the memory 140 or an external server. In this case, the image display device 100 may connect to the external server to obtain the personal information.

Information within the personal information DB 145 may be directly input by the user or automatically generated by the use of the image display device 100, or may be received from other external servers that store personal information about the user and/or acquaintances of the user, such as a social network service (SNS).

One or more profile images may be stored for each of the user and the acquaintances. As the profile images are updated, the outdated profile images may remain stored without being deleted. The profile images of the user and each acquaintance that were used in the past may be stored on a time period basis. The profile images, which are images for visually identifying the user and each acquaintance, may be photos of the user and each acquaintance or their corresponding images, or 2D or 3D avatars. The type of the profile images is not limited.

The controller 170 of the image display device 100 may learn the personal information through AI. Accordingly, the controller 170 may learn the personal information for each of the user and the acquaintances, making it easy to infer whose information an input belongs to when information is input. Further, the controller 170 may predict past or future personal information (e.g., profile images) that is not recorded in the personal information DB 145, based on the learned personal information.

The controller 170 may receive a user command through the remote control device 200 [S42]. The user command may be a voice command from the user input through the voice sensor 245 of the remote control device 200. The voice command of the user may be a natural language command. However, the user command is not limited to a voice command. For example, the user command may be a text command input through a virtual keyboard displayed on the display 180.

The controller 170 may analyze the user's intent based on the user command through AI [S43]. The controller 170 may also transmit the user command to an external server for AI intent analysis and receive the user's intent from the external server [S41].

The analysis of the user's intent may involve extracting information related to the meaning of a sentence or text corresponding to the user command. For this purpose, AI may understand and infer the structure of the sentence, the relationship between words, and semantic similarity.

For the user's intent analysis based on natural language understanding (NLU), syntactic parsing, semantic parsing, named entity recognition, semantic linking, and sentiment analysis may be performed.

Syntactic parsing is for analyzing the structure of a sentence to grasp the grammatical role and relationship of words. Through this, part-of-speech tagging, syntax tree generation, and the like may be performed.

Semantic parsing is for understanding and inferring the meaning of a sentence. In semantic parsing, the meaning of words may be extracted and the relationship and connectivity within the sentence may be grasped, thereby identifying semantically similar words or sentences.

In named entity recognition, specific types of named entities (persons, places, dates, and so on) may be recognized and extracted from a sentence. Through this, important information may be identified and analyzed from the sentence.

Semantic linking is for analyzing the semantic connection between words or entities within a sentence.

Sentiment analysis is for analyzing whether a sentence or text is positive, negative, or neutral. Through this, the emotion embedded in the text may be understood and inferred.

The controller 170 may search for content that matches the user's intent [S44]. The controller 170 may also connect to an external server that provides content, for the search and download of the content.

The controller 170 may display a screen of a list of the detected content on the display 180 [S45].

The controller 170 may play content selected by the user from the list screen and display it on the display 180. Herein, the controller 170 may display the profile photos of the user and/or the acquaintances together. The selection of the content on the list screen may be performed through the operation of the remote control device 200.

The displayed profile photos may be one downloaded from the personal information DB 145. Alternatively, the displayed profile photos may be those synthesized or generated using AI based on the profile photos stored in the personal information DB 145 [S46]. This will be described again later.

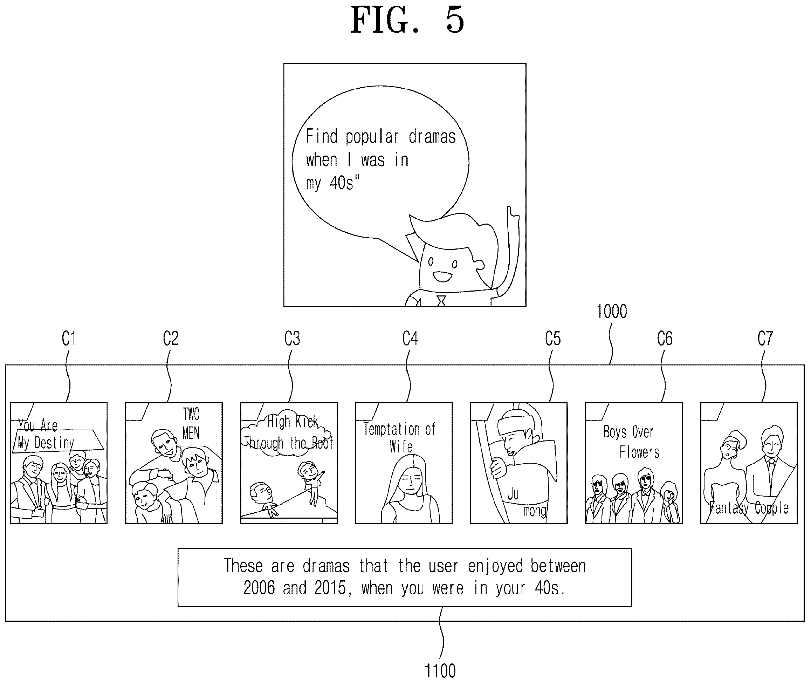

An operation of the image display device according to an embodiment of the present disclosure will be described with reference to FIGS. 5 to 7. FIGS. 5 to 7 illustrated screens displayed on the image display device according to an embodiment of the present disclosure.

As illustrated in FIG. 5, for example, the user may input a natural language voice command such as "Find me a popular drama from when I was in my 40s" to the image display device 100 through the voice sensor. The voice sensor may belong to the image display device 100 or the remote control device 200.

The controller 170 may identify the user's intent in the voice command based on the profile information (e.g., a current age) about the user and a content viewing history of the user.

The controller 170 may search for at least one piece of content matching the user's intent and control the display 180 to display a list 1000 of the detected content. The list 1000 may include thumbnails C1 to C7 for the respective detected pieces of content.

Further, the controller 170 may display a search criterion 1100 corresponding to the user's intent along with the content list 1000.

One piece of content (e.g., content C3) from the content list 1000 may be selected by the user through the operation of the remote control device 200.

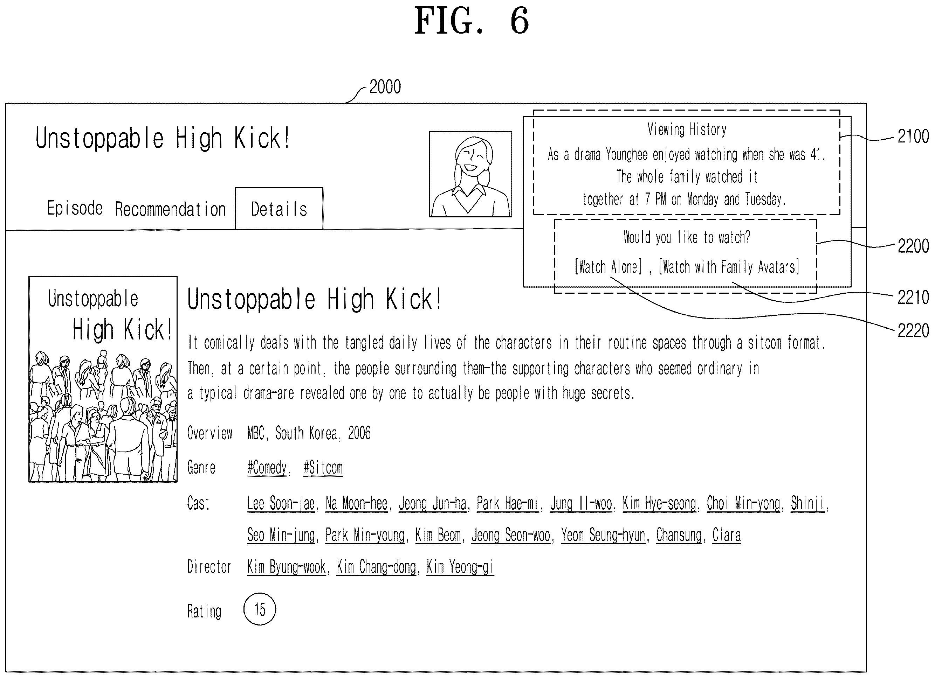

Then, as illustrated in FIG. 6, the controller 170 may control the display 180 to display an information screen 2000 for the selected content.

The content information screen 2000 may include information about at least one of the name, poster, synopsis, production company, year of production, genre, cast, crew, or rating of the selected content.

In addition, the controller 170 may display a viewing history 2100 of the user for the selected content and a selection menu 2200 for selecting whether to play the selected content. Although not shown, in addition to the viewing history 2100 and the selection menu 2200, schedule/event information corresponding to a time period matching the user's intent may also be displayed.

The viewing history 2100 may include information about when the user watched the content and whom the user watches it with.

During the playback of the content, a camera provided to face forward from the image display device 100 may capture an image of what is ahead of the image display device 100, and identify a person in the captured image through AI. The profile image of an acquaintance in the personal information DB 145 may be used for this purpose. Through this, the controller 170 may cumulatively store a playback time and information about a person who watches the content with the user in the personal information DB 145, when the content is played. This may be used to generate the viewing history 2100.

The selection menu 2200 may include a watch alone option 2210 and a watch together option 2220.

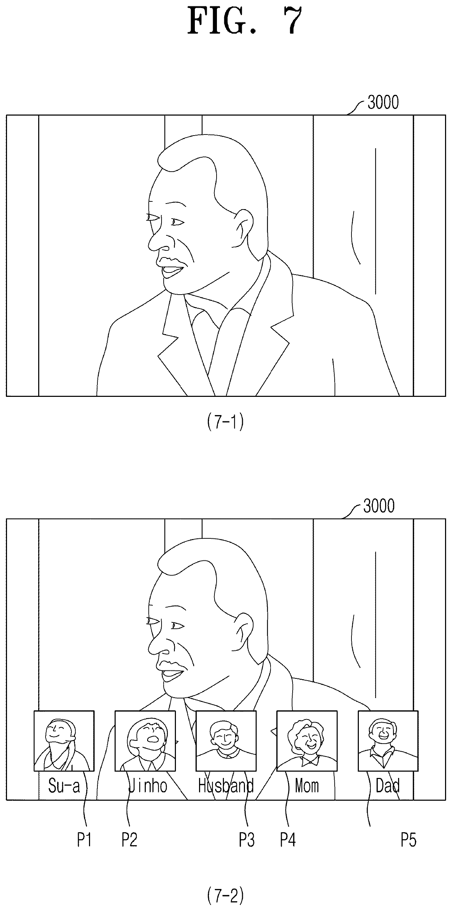

When the watch alone option 2210 is selected by the user through the operation of the remote control device 200, the controller 170 may play the selected content and display played content 3000 on the display 180, as illustrated in (7-1) of FIG. 7.

Conversely, when the watch together option 2220 is selected by the user through the operation of the remote control device 200, the controller 170 may play the selected content and display the played content 3000 on the display 180, while also displaying profile images P1 to P5 of persons (i.e., acquaintances) who watched the content together in the past, as illustrated in (7-2) of FIG. 7.

The profile image displayed for each acquaintance is not a profile image at the current time, but may be the profile image of each acquaintance at the past time point when the content was watched together. Therefore, when the profile image of each acquaintance at the past time point is stored in the personal information DB 145, the controller 170 may retrieve and display the profile image of each acquaintance at the past time point.

However, when the past time profile image of the acquaintance is not available, the controller 170 may newly synthesize or generate a profile image for the past time point (e.g., a time point 10 years ago from the present) through AI, based on the profile image of the acquaintance at another time point (e.g., the current time point) stored in the personal information DB 145. That is, the controller 170 may newly synthesize or generate and display the profile image for the past time point by having the time difference (e.g., 10 years) between the other time point and the past time point reflected in the current time profile image. In other words, the controller 170 may newly synthesize or generate the profile image for the past time point so that the person in the profile image at the past time point is the same person as in the current time profile image, but appears 10 years younger.

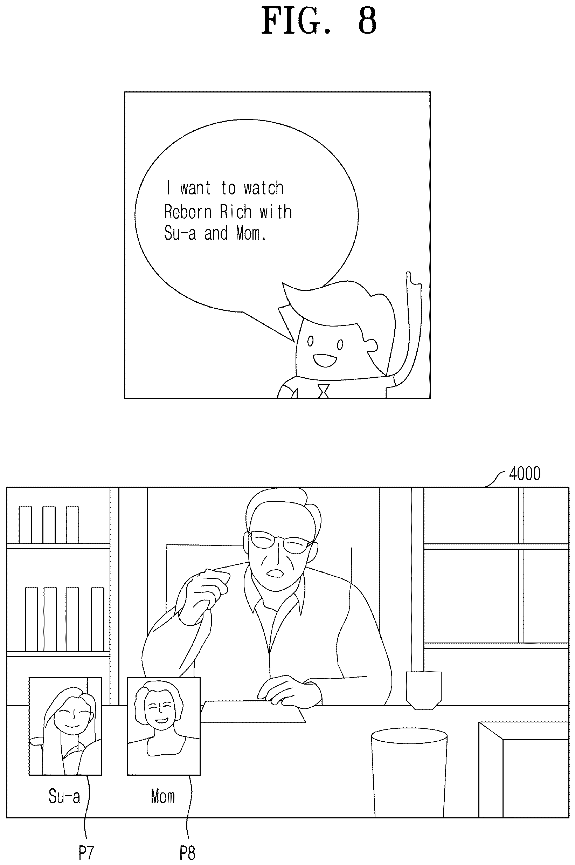

It has been described above that upon user selection of content from the content list 1000 displayed according to the user command, the image display device 100 displays the information screen 2000 for the selected content before playing it. However, the content may be selected and played solely by the user command without displaying at least one of the content list 1000 or the content information screen 2000. This will be described further with reference to FIG. 8. FIG. 8 illustrates a screen displayed on the image display device according to an embodiment of the present disclosure.

As illustrated in FIG. 8, for example, the user may input a natural language voice command such as "I want to watch 'Reborn Rich' with Su-a and Mom" to the image display device 100 through the voice sensor. Herein, "Reborn Rich" refers to the name of content.

The controller 170 may identify the user's intent in the voice command based on the personal information about the user.

Then, the controller 170 may search for and play content matching the user's intent and control the display 180 to display played content 4000.

Further, the controller 170 may retrieve profile images P7 and P8 of acquaintances (i.e., Su-a and Mom) matching the user's intent from the personal information DB 145 and display them along with the played content 4000. The profile images may be profile images of the respective acquaintances at the current time point.

When the personal information DB 145 does not have the profile images at the current time point but only has profile images at a past time point (e.g., a time point 5 years ago from the present), the controller 170 may newly generate or synthesize and display profile images at the current time point based on the profile images at the past time point. That is, the controller 170 may newly synthesize or generate the profile images at the current time point so that the persons in the profile images at the current time point are the same persons as in the profile images at the past time point, but appear 5 years older.

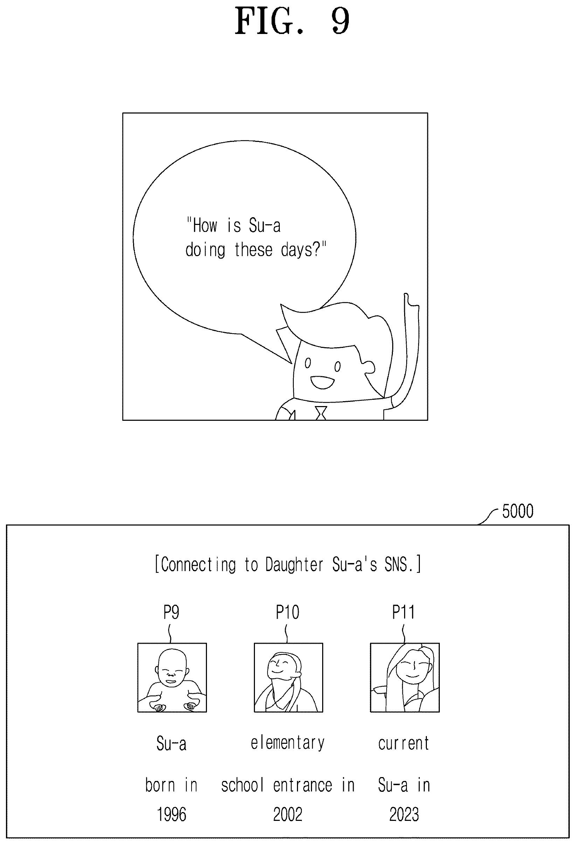

The profile images may also be displayed without a playback screen of multimedia content. This will be described further with reference to FIG. 9. FIG. 9 illustrates a screen displayed on the image display device according to an embodiment of the present disclosure.

As illustrated in FIG. 8, for example, the user may input a natural language voice command such as "How is Su-a doing these days?" to the image display device 100 through the voice sensor.

The controller 170 may identify the user's intent in the voice command based on the personal information about the user.

Then, the controller 170 may identify an acquaintance matching the user's intent and obtain personal information about the identified acquaintance matching the user's intent from the personal information DB 145. When the personal information matching the user's intent is not stored in the personal information DB 145, the controller 170 may connect to an external server (e.g., an SNS server) that stores the personal information matching the user's intent and obtain the personal information.

Then, the controller 170 may display a screen 5000 of the personal information about the acquaintance matching the user's intent on the display 180.

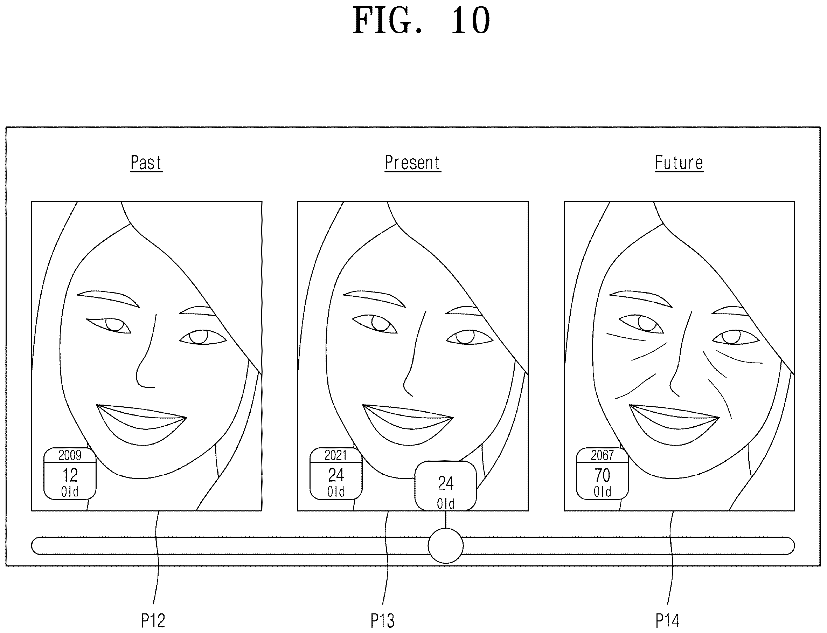

The afore-described image synthesis or generation will be described further with reference to FIG. 10. FIG. 10 illustrates an example of image synthesis or generation according to an embodiment of the present disclosure.

As illustrated in FIG. 10, the controller 170 may change, synthesize, or generate a past image P12 or future image P14 of a person based on a current image P13 of the user through AI. Alternatively, the controller 170 may synthesize or generate the current image P13 or future image P14 of the user based on the past image P12 of the person through AI. This may be implemented by adjusting facial features and skin tone in the person's image, making the skin smooth or rough, and removing or adding wrinkles.

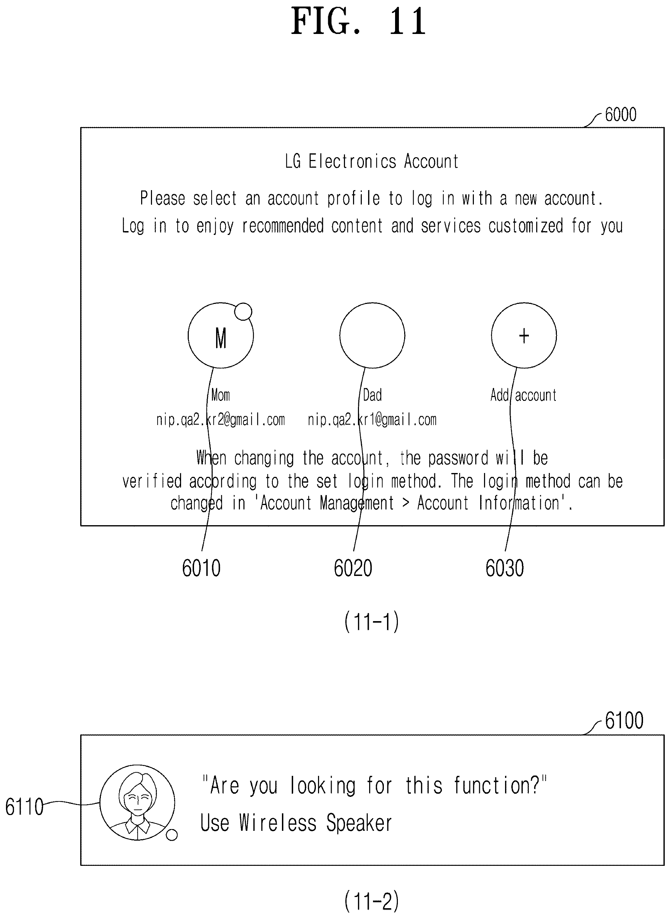

Login of the user and a usage guide for the user on the image display device will be described below with reference to FIG. 11. FIG. 11 illustrates a screen displayed on the image display device according to an embodiment of the present disclosure.

As illustrated in (11-1) of FIG. 11, when entering a settings menu of the image display device 100, the controller 170 may display a login screen (or account settings screen) 6000 on the display 180.

The login screen may display icons 6010 and 6020 for at least one preset account and an icon 6030 for adding an account.

The user may proceed with login by selecting the user's account icon from the at least one account icon 6010 and 6020.

Alternatively, the user may proceed with login by creating a new account through the account addition icon 6030.

As illustrated in (11-2) of FIG. 11, the controller 170 may display a usage guide 6100 on the display 180 to guide the user in using the image display device 100. When the user operates a menu and/or when a specific event (e.g., an external device connection event) occurs, the usage guide 6100 may be displayed. A guide agent 6110 may be displayed on the usage guide 6100. The guide agent 6110 may be a virtual human, for example.

However, the controller 170 may change, generate, or synthesize the appearance of the guide agent 6110 so that the appearance of the guide agent 6110 naturally ages over time. The change, generation, or synthesis of the appearance has been described with reference to FIG. 10. Accordingly, the user may feel as if the image display device 100 is a companion device while observing the changes in the appearance of the guide agent 6110 over time.

The present disclosure described above may be implemented as a computer-readable code on a medium in which a program is recorded. The computer-readable medium includes all types of recording devices in which data that may be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like, and also include those implemented in a form of a carrier wave (e.g., transmission via the Internet). In addition, the computer may include the controller 170 of the image display device and the controller 280 of the remote control device. Therefore, the detailed description above should not be construed as restrictive in all respects and should be considered exemplary. The scope of the present disclosure should be determined by a reasonable interpretation of the appended claims, and all changes within the equivalent scope of the present disclosure are included within the scope of the present disclosure.

## Claims

1. An image display device comprising:
a display;
a communication interface for communicating with at least one external server;
a user input interface for communicating with a remote control device; and
a controller controlling to:
receive a user command input through the remote control device;
display, on the display, a content list including at least one piece of content corresponding to a user intent identified from the user command through artificial intelligence; and
search for and display a past viewing history for content selected from the content list, wherein the past viewing history includes information about a viewing time of the selected content and information about an acquaintance who viewed the selected content together.

2. The image display device of claim 1, wherein personal information including the past viewing history is recorded in at least one of one of the at least one external server or a storage within the image display device.

3. The image display device of claim 1, wherein the controller controls to display a search criterion based on the user intent together, when displaying the content list.

4. The image display device of claim 1, wherein the controller controls to display a profile image of the acquaintance who viewed the content together during playback of the selected content.

5. The image display device of claim 4, wherein the displayed profile image is a profile image corresponding to the viewing time.

6. The image display device of claim 5, wherein the controller controls to synthesize the profile image corresponding to the viewing time based on a profile image for a time other than the viewing time through artificial intelligence.

7. The image display device of claim 1, wherein the controller controls to connect to one of the at least one external server through the communication interface and search for the at least one piece of content corresponding to the user intent.

8. The image display device of claim 1, wherein the user command is a voice command input through the remote control device.

9. The image display device of claim 1, wherein the controller controls to connect to one of the at least one external server in response to the user intent, and download and display social network service (SNS) information about the acquaintance.

10. The image display device of claim 1, wherein the controller controls to display a usage guide for guiding to occurrence of a specific event and change appearance of a guide agent within the usage guide over time.

11. A method for controlling an image display device, comprising:
receiving a user command input through a remote control device;
displaying a content list including at least one piece of content corresponding to a user intent identified from the user command through artificial intelligence; and
searching for and displaying a past viewing history for content selected from the content list, wherein the past viewing history includes information about a viewing time of the selected content and information about an acquaintance who viewed the selected content together.

12. The method of claim 11, wherein personal information including the past viewing history is recorded in at least one of one of at least one external server or a storage within the image display device.

13. The method of claim 11, comprising displaying a search criterion based on the user intent together, when displaying the content list.

14. The method of claim 11, comprising displaying a profile image of the acquaintance who viewed the content together during playback of the selected content.

15. The method of claim 14, wherein the displayed profile image is a profile image corresponding to the viewing time.

16. The method of claim 15, comprising synthesizing the profile image corresponding to the viewing time based on a profile image for a time other than the viewing time through artificial intelligence.

17. The method of claim 11, comprising connecting to one of at least one external server and searching for the at least one piece of content corresponding to the user intent.

18. The method of claim 11, wherein the user command is a voice command input through the remote control device.

19. The method of claim 11, comprising connecting to one of the at least one external server in response to the user intent, and downloading and displaying social network service (SNS) information about the acquaintance.

20. The method of claim 11, comprising displaying a usage guide for guiding to occurrence of a specific event,
wherein appearance of a guide agent within the usage guide is changed over time.
